# FASCICULE DE BREVET EUROPEEN

(11) **EP 1 104 120 B1**
(45) Date de publication et mention de la délivrance du brevet: **01.03.2006**
(21) Numéro de dépôt: 00403113.4
(22) Date de dépôt: 09.11.2000
(51) Int. Cl.: H04B 7/005

(54) **Transmission à haut et bas debit pour la liaison de télécommande d'un satellite**
Übertragung mit hoher und niedriger Bitrate für die Fernsteurungsverbindung eines Satelliten
High and low bit rate transmission for the remote control link of a satellite

(30) Priorité: 29.11.1999 FR 9914973
(43) Date de publication de la demande: 30.05.2001
(73) Titulaire: ALCATEL, 75008 Paris (FR)
(72) Inventeur: Nasta, Rodolphe, 31100 Toulouse (FR); Tonello, Emile, 31470 St Lys (FR)
(74) Mandataire: Smith, Bradford Lee

(56) Documents cités:
- WO-A-99/21287
- US-A- 4 691 236

## Description

La présente invention concerne le domaine des satellites, et plus précisément la transmission/réception de signaux de commande/télémesure vers les satellites, par la liaison de télémesure, télécommande et mesure de distance entre les stations au sol et un satellite. Cette liaison est plus couramment appelée liaison de télécommande ou liaison TTC, acronyme de l'anglais Telemetry, Tracking and Command, en français télémétrie, poursuite et télécommande; ou liaison TCR, pour l'anglais Telemetry, Command et Ranging, en français télémétrie, télécommande et mesure de distance. Une telle liaison doit être établie de façon très fiable durant toutes les phases de la vie d'un satellite; on peut globalement distinguer quatre phases:
- une phase de mise à poste, qui correspond à la période depuis l'injection par le lanceur jusqu'au ralliement de la position définitive du satellite;
- une phase de maintien à poste, qui correspond à la phase d'opération nominale du satellite;
- une phase de secours, le cas échéant, qui correspond à une panne et pendant laquelle l'altitude du satellite peut être modifiée ; et
- une phase de désactivation ou déorbitation, au cours de laquelle le satellite est envoyé sur une orbite dite cimetière ou en réentrée atmosphérique.

Pendant toutes ces phases, il est important que la liaison TTC soit conservée, et les satellites sont à cet effet munis d'antennes. Un premier jeu d'antennes omnidirectionnelles est utilisé pendant les phases de mise à poste et de secours, pendant lesquelles la charge utile du satellite n'est pas activée; au cours de ces phases, l'attitude du satellite peut varier.

Pendant la phase de maintien à poste, la charge utile du satellite est activée, et le satellite garde une position nominale. On peut de ce fait utiliser une antenne directionnelle.

Les deux antennes sont généralement reliées à un récepteur de télécommande redondé, qui permet de démoduler les signaux reçus, et traite habituellement des rythmes de bit faibles, de l'ordre de 1 kb/s. On utilise pour les satellites connus une modulation par sous porteuse, et par exemple dans le cas de ARABSAT, ASTRA, STENTOR, NILESAT, ... une modulation NRZ/BPSK/FM. On note ainsi une modulation avec une forme d'onde NRZ (non-retour à zéro), qui module une sous porteuse en BPSK (modulation par déplacement de phase à deux états). La sous porteuse, par exemple à une fréquence de l'ordre de 8 kHz, est utilisée pour une modulation de fréquence de la porteuse, par exemple autour de 5800-6700 MHz pour des systèmes opérant en bande C, et autour de 12700-14800 MHz pour des systèmes opérant en bande Ku, avec une excursion de l'ordre de 400 kHz.

US-A-4 691 236 décrit un récepteur pour un système de télécommunications par satellites. Pour pallier les effets du mauvais temps, il est proposé de transmettre les signaux vers le satellite suivant deux modes. Dans un premier mode de transmission en ciel clair, sont transmis vers le satellite par modulation de fréquence des signaux d'image ainsi que des signaux de son et de données; les signaux d'image ont une fréquence de modulation allant jusqu'à 4,5 MHz, tandis que les signaux de son et de données sont modulés sur une sous-porteuse à 5,727 MHz par modulation PSK à quatre états. Dans un deuxième mode de transmission de secours, seuls les signaux de son et de données sont transmis, par modulation de fréquence directement sur la porteuse. Il est ainsi possible d'utiliser en ciel clair toute la bande disponible, et de transmettre en mode de secours les signaux de son et de données dans la bande disponible. A la réception, après démodulation de la porteuse, ce document suggère de détecter la présence de signaux de synchronisation en bande basse pour déterminer le mode de transmission. De fait, les signaux vidéo ne sont présents que dans le mode de transmission en ciel dair. Ce document est muet sur le problème de la commande des satellites. En outre, la modulation de sous-porteuse est uniquement utilisée dans ce document pour décaler en fréquence les signaux de son et de données, et permettre leur multiplexage fréquentiel avec les signaux d'image.

WO-A-99 21287 décrit un procédé de compensation des variations de qualité d'une liaison RF, telle qu'une liaison avec un satellite. Ce document propose de passer d'une modulation QPSK à une modulation BPSK en cas de dégradation de la qualité de la liaison, ce qui assure un gain de 3 dB. Le débit est divisé par deux pour une fréquence de symbole identique.

Un problème qui se pose maintenant est l'évolution des rythmes de bit nécessaires pour la télécommande des satellites, du fait notamment de l'augmentation de la complexité des charges utiles, et de leur besoin en commandabilité croissant.

L'invention a pour objet une solution à ce problème. Elle permet, par des modifications mineures des récepteurs existants, de rendre possible des débits différents sur la liaison de télécommande d'un satellite, en fonction des différentes phases de la vie du satellite. L'invention évite de multiplier les récepteurs, et permet de conserver un faible rythme pour les phases de mise à poste et de secours du satellite. On assure ainsi le bilan de liaison pendant ces phases, malgré l'emploi d'antenne(s) à large couverture et à gain faible. L'invention permet aussi un passage automatique d'un rythme à l'autre.

Plus précisément, l'invention propose un procédé de transmission sur la liaison de télécommande d'un satellite, comprenant :
- au moins une phase de modulation directe d'une porteuse pour la transmission à haut débit sur la liaison, et
- au moins une phase de modulation avec une sous porteuse de la dite porteuse pour la transmission à bas débit sur la liaison.

Dans un mode de réalisation, la phase de modulation directe est mise en oeuvre pendant une phase où le satellite est en mode pointé Terre, tel que lors du maintien à poste du satellite.

Dans un autre mode de réalisation, la phase de modulation avec une sous porteuse est mise en oeuvre pendant une phase où le satellite est en mode non pointé Terre, et par exemple lors de la mise à poste du satellite ou lors du secours du satellite.

L'invention propose aussi un récepteur pour la liaison de télécommande d'un satellite, comprenant :
- un démodulateur de porteuse;
- un démodulateur de sous porteuse recevant les signaux fournis par le démodulateur de porteuse;
- des moyens de synchronisation et de détection bit recevant les signaux fournis par le démodulateur de porteuse.

De préférence, le récepteur comporte aussi un commutateur recevant en entrée les signaux fournis par le démodulateur de sous porteuse et par les moyens de synchronisation et de détection bit. Le commutateur peut être commandé en fonction de la présence d'une sous-porteuse dans les signaux fournis par le démodulateur de porteuse.

L'invention propose encore un satellite comprenant un tel récepteur.

L'invention propose aussi un émetteur pour la liaison de télémesure d'un satellite, comprenant :
- un générateur de signaux;
- un commutateur recevant les signaux fournis par le générateur de signaux;
- un modulateur de sous-porteuse recevant les signaux d'une des sorties du commutateur ;
- un modulateur de porteuse recevant les signaux de l'autre sortie du commutateur ou du modulateur de sous porteuse.

Avantageusement, le commutateur est commandé en fonction du rythme des signaux fournis par le générateur de signaux.

D'autres caractéristiques et avantages de l'invention apparaîtront à la lecture de la description qui suit de modes de réalisation de l'invention, donnée à titre d'exemple uniquement, et en référence aux figures annexées qui montrent :
- figure 1, un schéma d'un récepteur connu pour la liaison de télécommande d'un satellite ;
- figure 2, un schéma d'un récepteur selon l'invention;
- figure 3, un schéma d'un émetteur selon l'invention.

L'invention propose, pour permettre une variation des rythmes de bit sur la liaison de télécommande d'un satellite, d'utiliser pour les faibles débits une modulation avec une sous porteuse, et pour les forts débits, une modulation directe. Cette solution permet de conserver les antennes existantes, et ne nécessite que des modifications mineures des récepteurs et émetteurs existants. La liaison à faible débit est adaptée aux phases de mise à poste et de secours, pendant lesquelles la charge utile n'est pas active. La liaison à fort débit est adaptée à la phase de maintien à poste, pendant laquelle la charge utile est activée; elle permet de répondre à des besoins accrus de commande de la charge utile.

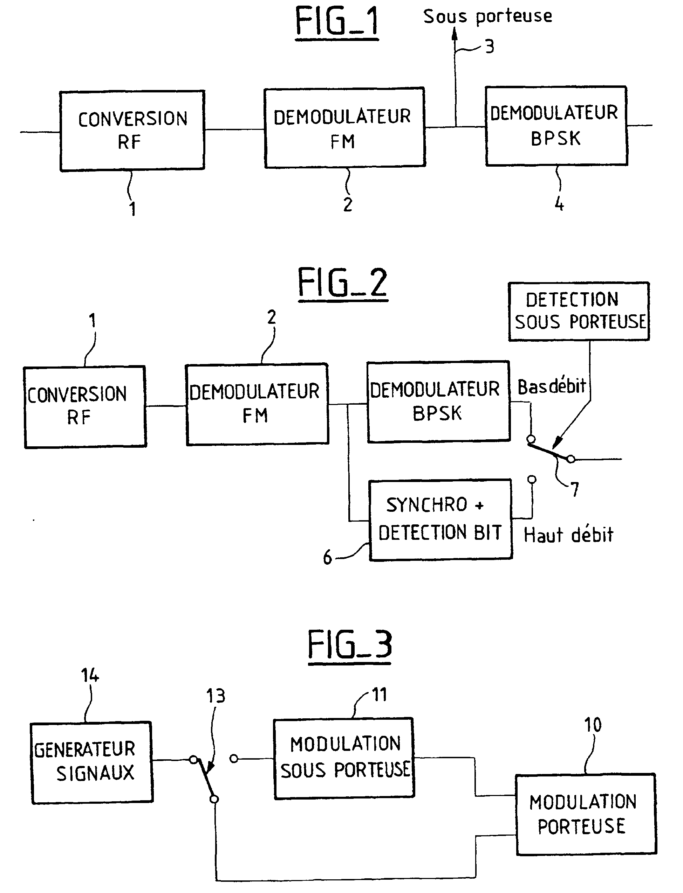

La figure 1 montre un schéma d'un récepteur connu pour la liaison de télécommande d'un satellite; le récepteur est adapté à l'exemple mentionné plus haut d'une modulation NRZ/BPSK/FM. Le récepteur comporte des moyens de conversion radiofréquence 1, marqués RF, qui permettent d'abaisser la fréquence des signaux reçus sur l'antenne pour permettre leur traitement subséquent. Les signaux à la fréquence abaissée sont fournis à un démodulateur FM 2, qui démodule la modulation de fréquence des signaux; la sous porteuse est ensuite extraite, comme symbolisé par la flèche 3, et un démodulateur BPSK 4 permet de démoduler la sous porteuse, pour retrouver un signal NRZ dont sont extraits les bits. Ce récepteur fonctionne bien pour des rythmes de bit faibles qui sont actuellement utilisés pour la liaison de télécommande d'un satellite.

La figure 2 montre un schéma d'un récepteur selon l'invention. Le récepteur de l'invention comprend, outre les éléments du récepteur connu, une deuxième voie permettant une démodulation directe. Des moyens de synchronisation bit et de détection 6 sont connectés en sortie du démodulateur FM, et permettent de démoduler la porteuse modulée directement, par exemple la porteuse modulée par des impulsions NRZ, en modulation de fréquence avec une excursion de l'ordre de 400 kHz. On retrouve en sortie des moyens de synchronisation bit et de détection 6 des bits.

Les signaux fournis en sortie par le démodulateur bas débit ou démodulateur BPSK 4 sont fournis à une entrée d'un commutateur 7; l'autre entrée du commutateur 7 reçoit les signaux fournis en sortie des moyens de synchronisation bit et de détection 6. Comme le montre la figure, la position du commutateur 7 peut être commandée en fonction de la présence de la sous porteuse; lorsque celle-ci est détectée dans le signal fourni par le démodulateur FM, on est en présence d'une modulation avec sous porteuse à un rythme faible ; en revanche, lorsque la sous porteuse n'est pas détectée dans le signal fourni par le démodulateur FM, on est en présence d'une modulation directe. On peut ainsi en fonction de la présence de la sous-porteuse commander l'usage de la chaîne de démodulation à haut débit - formée du démodulateur FM et des moyens de synchronisation bit et de détection - ou de la chaîne de démodulation à bas débit - formée du démodulateur FM et du démodulateur BPSK.

La position du commutateur 7 peut aussi être commandée par un équipement autre que le récepteur; on peut à cet effet utiliser par exemple le calculateur bord; la position du commutateur peut aussi être commandée sur un critère autre que la présence /absence de sous-porteuse : ce peut être dans ce cas une décision bord en fonction du mode satellite. On peut aussi envisager de commander la position du commutateur en fonction du pointage du satellite, et par exemple passer en démodulation directe lorsque le satellite est pointé Terre. Inversement, on passerait en démodulation de sous porteuse lorsque le satellite n'est pas pointé Terre. Par exemple, on pourrait sélectionner la démodulation de sous-porteuse lors du passage en mode secours.

A l'émission, on peut utiliser un montage symétrique du montage de la figure 2. Autrement dit, comme le montre la figure 3, on peut prévoir un modulateur 10, qui assure la modulation d'une porteuse. Le modulateur est attaqué par les signaux provenant d'une chaîne de modulation bas débit, ou par les signaux à haut débit. La chaîne de modulation bas débit comprend un modulateur 11 de sous porteuse, qui reçoit les signaux bas débit. Les signaux haut débit sont appliqués directement au modulateur de porteuse. On peut comme dans l'exemple de la figure 2 prévoir un commutateur 13 en sortie du générateur de signaux 14, le commutateur étant commandé en fonction du débit des signaux.

L'invention propose plus généralement d'utiliser pour la liaison de télécommande d'un satellite des modulations différentes d'une porteuse, en fonction des débits à obtenir; on peut commander les débits en fonction des phases de la vie du satellite, comme expliqué plus haut. Pour les bas débits, la porteuse est modulée par une sous porteuse, qui est elle-même modulée par les signaux à transmettre; en revanche pour les hauts débits, les signaux à transmettre modulent directement la porteuse.

Dans l'exemple donné plus haut, on a mentionné le NRZ comme forme d'onde des signaux à transmettre. L'invention s'applique non seulement à cette forme d'impulsions, mais aussi bien à d'autres formes d'ondes, et par exemple à des signaux RZ de forme quelconque.

La modulation de la sous porteuse est dans l'exemple une modulation BPSK. On peut aussi prévoir d'autres types de modulation de la sous porteuse, et notamment une modulation FSK (modulation par déplacement de fréquence) avec un nombre d'états quelconque, ou encore toute modulation de type PSK (Phase Shift Keying)

La modulation de la porteuse par la sous porteuse peut être non seulement une modulation de fréquence comme dans l'exemple, mais aussi une modulation de phase.

La modulation directe de la porteuse peut aussi être une modulation de fréquence ou une modulation de phase. Outre l'exemple d'une modulation NRZ/FM, on pourrait utiliser comme modulation directe toute modulation MIC/FM (ou PCM/FM en langue anglaise), par exemple une modulation de type Manchester, bi-phase-L ou -M, NRZ-M ou -S, ....

Il est avantageux pour simplifier le récepteur que la modulation de la porteuse soit identique pour la modulation directe et pour la modulation par la sous-porteuse. De fait, dans ce cas, la structure du démodulateur de la porteuse dans le récepteur, ou du modulateur de la porteuse dans l'émetteur peut être simplifiée.

Le fait d'utiliser la même forme d'onde pour la modulation directe de la porteuse et pour la modulation de la sous-porteuse - du NRZ dans l'exemple - permet d'utiliser le même générateur de signaux pour les hauts et bas débits, et simplifie encore la structure de l'émetteur.

Des couples préférés de modulation bas débit et de modulation haut débit sont donnés dans le tableau suivant :

| Modulation bas débit avec sous porteuse | Modulation directe haut débit |
|---|---|
| NRZ/BPSK/FM | NRZ/FM |
| NRZ/BPSK/PM | NRZ/PM |
| NRZ/FSK/FM | NRZ/FM |
| NRZ/FSK/PM | NRZ/PM |

Dans tous les cas, on peut obtenir un rythme bit pour les bas débits qui est de l'ordre de 1 kb/s, ou plus généralement inférieur à 10 kb/s. On peut obtenir pour les hauts débits un rythme bit qui est de l'ordre de 100 kb/s ou plus, et plus généralement supérieur à 50 kb/s.

L'invention ne nécessite pas de duplication du matériel, mais simplement une adaptation du récepteur existant. Elle permet des transmissions à bas débits, et donc peut avantageusement être utilisés lors des phases de mise à poste et de secours, avec une ou des antenne(s) omnidirectionnelle(s). On préserve le bilan de liaison, et ce malgré le faible gain de l'antenne. Plus généralement, la modulation avec sous porteuse peut être mise en oeuvre pendant toutes les phases où le satellite n'est pas pointé Terre.

Pendant la phase de maintien à poste du satellite, l'invention permet une transmission à haut débit sur la liaison de télécommande du satellite. On peut plus généralement utiliser une telle modulation directe pendant toute phase du satellite en mode pointé Terre, qui nécessite une transmission haut débit.

Bien entendu, la présente invention n'est pas limitée aux exemples et modes de réalisation décrits et représentés, mais elle est susceptible de nombreuses variantes accessibles à l'homme de l'art.

## Revendications

1. Un procédé de transmission sur la liaison de télécommande d'un satellite, comprenant :
- au moins une phase de modulation directe d'une porteuse pour la transmission à haut débit sur la liaison, et
- au moins une phase de modulation avec une sous porteuse de la dite porteuse pour la transmission à bas débit sur la liaison.

2. Le procédé selon la revendication 1, **caractérisé en ce que** la phase de modulation directe est mise en oeuvre pendant une phase où le satellite est en mode pointé Terre, tel que lors du maintien à poste du satellite.

3. Le procédé selon la revendication 1 ou 2, **caractérisé en ce que** la phase de modulation avec une sous porteuse est mise en oeuvre pendant une phase où le satellite est en mode non pointé Terre.

4. Le procédé selon la revendication 3, **caractérisé en ce que** la phase de modulation avec une sous porteuse est mise en oeuvre lors de la mise à poste du satellite.

5. Le procédé selon la revendication 3, **caractérisé en ce que** la phase de modulation avec une sous porteuse est mise en oeuvre lors du secours du satellite.

6. Un récepteur pour la liaison de télécommande d'un satellite, comprenant :
- un démodulateur de porteuse (2) ;
- un démodulateur de sous porteuse (4) recevant les signaux fournis par le démodulateur de porteuse (2) ;
- des moyens de synchronisation et de détection bit (6) recevant les signaux fournis par le démodulateur de porteuse (2).

7. Le récepteur selon la revendication 6, **caractérisé en ce qu'**il comporte un commutateur recevant en entrée les signaux fournis par le démodulateur de sous porteuse (4) et par les moyens de synchronisation et de détection bit (6).

8. Le récepteur selon la revendication 7, **caractérisé en ce que** le commutateur est commandé en fonction de la présence d'une sous-porteuse dans les signaux fournis par le démodulateur de porteuse.

9. Un satellite présentant un récepteur selon la revendication 6, 7 ou 8.

10. Un émetteur pour la liaison de télécommande d'un satellite, comprenant :
- un générateur de signaux (14) ;
- un commutateur recevant les signaux fournis par le générateur de signaux;
- un modulateur de sous-porteuse (11) recevant les signaux d'une des sorties du commutateur ;
- un modulateur de porteuse recevant les signaux de l'autre sortie du commutateur (13) ou du modulateur de sous porteuse (11).

11. L'émetteur selon la revendication 10, **caractérisé en ce que** le commutateur est commandé en fonction du rythme des signaux fournis par le générateur de signaux.

## Patentansprüche

1. Verfahren zur Übertragung über die Fernsteuerungsverbindung eines Satelliten, bestehend aus:
- mindestens einer Phase mit direkter Modulation einer Trägerwelle zur Übertragung über die Verbindung mit hoher Bitrate, und
- mindestens einer Phase zur Modulation mit einem Unterträger der genannten Trägerwelle zur Übertragung über die Verbindung mit niedriger Bitrate.

2. Das Verfahren gemäß Anspruch 1, **dadurch gekennzeichnet, dass** die Phase mit direkter Modulation während einer Phase umgesetzt wird, in der der Satellit auf die Erde ausgerichtet ist, z.B. wenn der Satellit zeine Position hält.

3. Das verfahren gemäß Anspruch 1 oder 2, **dadurch gekennzeichnet, dass** die Phase der Modulation mit einem Unterträger während einer Phase umgesetzt wird, in der der Satellit nicht auf die Erde ausgerichtet ist.

4. Das Verfahren gemäß Anspruch 3, **dadurch gekennzeichnet, dass** die Phase der Modulation mit einem Unterträger umgesetzt wird, während der Satellit in Position gebracht wird.

5. Das Verfahren gemäß Anspruch 3, **dadurch gekennzeichnet, dass** die Phase der Modulation mit einem Unterträger während der Sicherung des Satelliten umgesetzt wird.

6. Ein Empfänger für die Fernsteuerungsverbindung eines Satelliten, bestehend aus:
- einem Demodulator der Trägerwelle (2);
- einem Demodulator des Unterträgers (4), der die vom Demodulator der Trägerwelle (2) gelieferten Signale empfängt;
- Mittel zur Synchronisierung und Biterfassung (6), die die vom Demodulator der Trägerwelle (2) gelieferten Signale empfangen.

7. Der Empfänger gemäß Anspruch 6, **dadurch gekennzeichnet, dass** er ein Schaltgerät umfasst, das an seinem Eingang die vom Demodulator des unterträgers (4) und von den Mitteln zur Synchronisierung und Biterfassung (6) gelieferten Signale empfängt.

8. Der Empfänger gemäß Anspruch 7, **dadurch gekennzeichnet, dass** das Schaltgerät in Abhängigkeit von der Anwesenheit eines Unterträgers in den vom Demodulator der Trägerwelle gelieferten Signalen gesteuert wird.

9. Ein Satellit, der einen Empfänger gemäß Anspruch 6, 7 oder 8 beinhaltet.

10. Ein Sender für die Fernsteuerungsverbindung eines Satelliten, bestehend aus:
- einem Signalgenerator (14);
- einem Schaltgerät, das die vom Signalgenerator gelieferten Signale empfängt;
- einem Modulator des Unterträgers (11), der die Signale eines der Ausgänge des Schaltgeräts empfängt;
- einem Modulator der Trägerwelle, der die Signale des anderen Ausgangs des Schaltgeräts (13) oder des Modulators des Unterträgers (11) empfängt.

11. Der Sender gemäß Anspruch 10, **dadurch gekennzeichnet, dass** das Schaltgerät in Abhängigkeit vom Takt der vom Signalgenerator gelieferten Signale gesteuert wird.

## Claims

1. A method of transmitting on the command link of a satellite, the method including:
- at least one stage of direct modulation of a carrier for transmission on the link at high bit rates; and
- at least one stage of subcarrier modulation of said carrier for transmission on the link at low bit rates.

2. The method of claim 1, **characterized in that** direct modulation is used during a stage of the satellite in which the satellite is pointed at the Earth, such as a station-keeping stage.

3. The method of claim 1 or claim 2, **characterized in that** subcarrier modulation is used during a stage of the satellite in which the satellite is not pointed at the Earth.

4. The method of claim 3, **characterized in that** subcarrier modulation is used during the station injection stage of the satellite.

5. The method of claim 3, **characterized in that** subcarrier modulation is used during the standby stage of the satellite.

6. A receiver for the command link of a satellite, the receiver including:
- a carrier demodulator (2);
- a subcarrier demodulator (4) receiving the signals supplied by the carrier demodulator (2); and
- bit synchronization and detection means (6) receiving the signals supplied by the carrier demodulator (2).

7. The receiver of claim 6, **characterized in that** it includes a switch receiving as input the signals supplied by the subcarrier demodulator (4) and by the bit synchronization and detection means (6).

8. The receiver of claim 7, **characterized in that** the switch is controlled as a function of the presence of a subcarrier in the signals supplied by the carrier demodulator.

9. A satellite incorporating a receiver of claim 6, claim 7, or claim 8.

10. A transmitter for the command link of a satellite, the transmitter including:
- a signal generator (14);
- a switch receiving the signals supplied by the signal generator;
- a subcarrier modulator (11) receiving the signals from one output of the switch; and
- a carrier modulator receiving the signals from the other output of the switch (13) or the subcarrier modulator (11).

11. The transmitter of claim 10, **characterized in that** the switch is controlled as a function of the bit rate of the signals supplied by the signal generator.
